# EUROPEAN PATENT APPLICATION

(11) **EP 2 309 703 A1**
(43) Date of publication of application: **13.04.2011**
(21) Application number: 10185853.8
(22) Date of filing: 16.12.2002
(51) Int. Cl.: H04M 1/00, H04N 1/00, H04M 11/06, H04N 7/14, H04M 1/725

(54) **Method and system for mobile telecommunication**

(30) Priority: 31.12.2001 FI 20012612
(62) Divisional of application: 06124409.1
(71) Applicant: Nokia Corporation, 02150 Espoo (FI)
(72) Inventor: Koskinen, Topi, FI-33420 Tampere (FI); Kalliokulju, Juha, FI-37470 Vesilahti (FI)
(74) Representative: Higgin, Paul

(57) **Abstract**

Method and system for transferring information such as pictures between two devices through a communication network. When an operation, e.g. taking a picture with a camera, is performed, the device recognizes (102) its mode, and if the mode is 'call active', the device edits (104) its user interface by offering a possibility to send the taken picture straight to the device with which the communication connection had been established. If the user chooses said sending possibility, the device sends (105) said information through a communication connection to another device. The use of multimedia functions is expedited, when a device offers the user such functions that he probably would like to currently use.

## Description

This is a divisional of the application EP 06 124 409.1 according to Art. 76 EPC.

The invention relates to a method and system for mobile telecommunication, especially to a method and system for transferring information such as pictures between two devices through a communication network.

### Technical background

Nowadays it is possible to send and receive information, such as text messages, during a voice connection with telecommunication devices such as mobile terminals operating in GSM system. However, it is difficult for the user to send text messages during a voice connection, and no such additional information can be given through text messages that could not be given as spoken information.

Apart from text messages, li the future it is also possible to send multimedia, such as voice and moving pictures, with a mobile phone. While operation possibilities as various kinds of information transmitting possibilities are increasing, it is important that the use of a telecommunication device is even then easy and simple. This is advantageous especially in case two users of telecommunication devices are in connection with each other and want to share also other information during this communication connection.

From document EP 0 953 901 is known a solution in which a user interface of a remote computing device can be configured by receiving user interface components that together form a screen to be displayed on a display screen. Each of the user interface components corresponds with a particular aspect of the user interface. Configuration of the user interface starts with establishing a communication session between the remote computing device and a network gateway. Once the communication session has been established, the network gateway determines if screen configuration information is to be downloaded to the remote computing device. If it is determined that screen configuration information is to be downloaded, the network gateway downloads the screen configuration information to the remote computing device.

From document WO 01/69470 is known a system for generating and managing dynamic content spreadsheets and of restricting access to content thereof. The system comprises a computing platform for executing software capable of creating a customized user interface as well as defining content for display in said interface, defining retrievable network sites, and defining a format for display of said content. The system provides for periodic updates of content. The restricting access is based upon verifying a location from which an access request originates.

### Summary of the invention

A purpose of the present method is to simplify and speed up the sending of various multimedia information from one electronic communication device, such as a mobile terminal, to another device when they are in communication connection with each other. When an operation, e.g. taking a picture with a camera of the device, is performed, the device recognizes its mode, and if the mode is 'call active', the device edits its user interface by offering a possibility to send the taken picture straight to the device with which the communication connection had been established.

Thus the device can automatically edit the user interface on the basis of its mode and user acts. Creating digital picture information and sending it to another device while a call is active, i.e. during an existing connection, is only one example. The invention may also be applied to other multimedia. The use of multimedia functions is expedited, when a telecommunication device offers the user such functions that he probably would like to currently use.

The invention is characterized by what is set forth in the accompanying independent claims. Preferred embodiments of the invention are described in the dependent claims.

Next, the invention will be explained in more detail with reference to the accompanying drawings, in which
- Fig. 1a: shows as a flowchart the method according to the invention,
- Figs. 1b, 1c: show as flowcharts an embodiment of the invention,
- Fig. 2a: shows an example of the electronic device according to the invention,
- Fig. 2b: shows an example of the arrangement according to the invention, and
- Fig. 3: shows an example of the information transfer between two devices.

### Detailed description of the invention

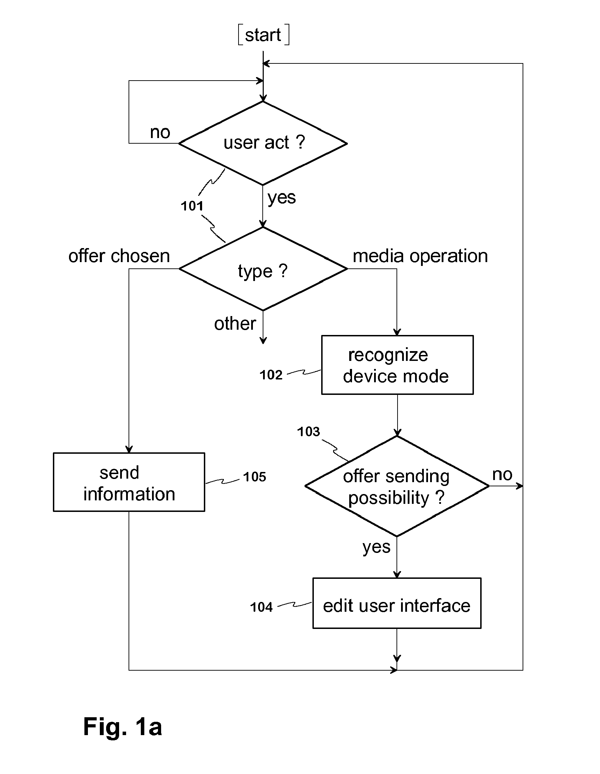

**Fig. 1a** illustrates as a flowchart the method according to the invention. The method is implemented with a computer program product stored in an electronic communication device. In step 101 the device identifies an act made by the user. If the user initiates a media operation, for example taking a picture, the device performs that operation and then recognizes the present mode of the device (step 102). The mode can be e.g. the readiness one or 'communication connected'. The latter means that a connection with another device exists through a communication network. In step 103 it is decided, depending on the recognized mode, whether a possibility to send information relating to said media operation will be offered to the user. If a network connection exists, said possibility is offered by editing the user interface, step 104. The editing means for example that a 'send' command appears in the displayed menu.

After step 104 it is returned to step 101, in other words the user act is waited and identified. If the user selects the 'send' command from the menu, or uses the sending possibility, this selection is detected and then determined that said information will be sent. The information may be sent to a second device through the existing network connection, or the connection which exists when the mode is recognized (step 105). If the existing network connection is relatively slow, e.g. a normal GSM channel, the information can be sent using another, faster connection, such as the GPRS connection.

The media operation is for example creating information in the device or retrieving information from the memory of the device. The information can be visual, i.e. still pictures, audio or audio-visual information, such as video clips.

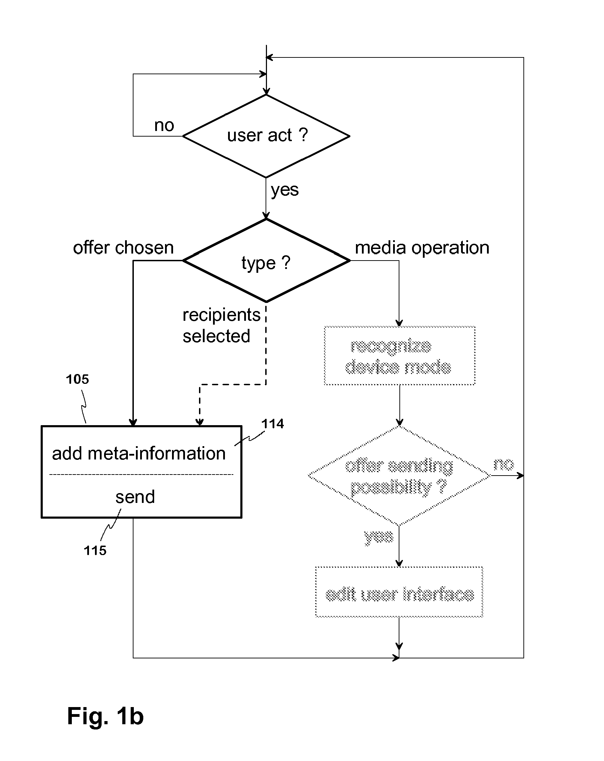

**Fig. 1b** illustrates as a flowchart an embodiment of the invention. In this example the media operation is either retrieving information, such as a picture, from an album in the memory of the device or creating information by the first device, e.g. taking a picture with its camera. The information can also be retrieved from an external memory, for example from a PC through a Bluetooth connection or from a network server. Meta-information, which tells the receiver whether the picture comes from a camera or album, is added (114) to the information to be sent. The meta-information may include also other matter, for example the title of the picture. Next, the picture with its meta-information is sent (115) to another device through the communication network.

The user can select also other recipient(s) in addition to the one to which the communication connection exists. Recipient(s) can be selected also when no communication connection exists.

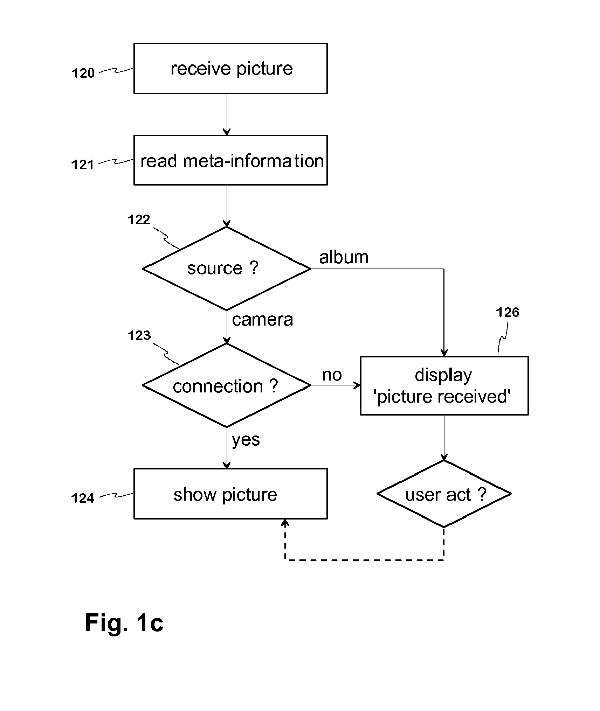

**Fig. 1c** illustrates as a flowchart an example of the function of a receiving device, or second communication device, in the case where the first device functions according to Fig. 1b. In step 120 the second device receives a picture. In step 121 the meta-information related to the received picture is read. In step 122 it is checked, on grounds of the content of the meta-information, whether the picture comes from a camera or album of the sending device. In the former case the mode of the device is recognized, i.e. whether the device is in readiness state or in communication connection with the device that sent the picture. If the connection exists, the picture is shown on the display of the second device (step 124). In case the received picture comes from an album of the sending device, a short message such as 'picture received' is shown on the display of the second device (step 126). After this a possible user's act is identified. For example, the user wants to see the picture on the display.

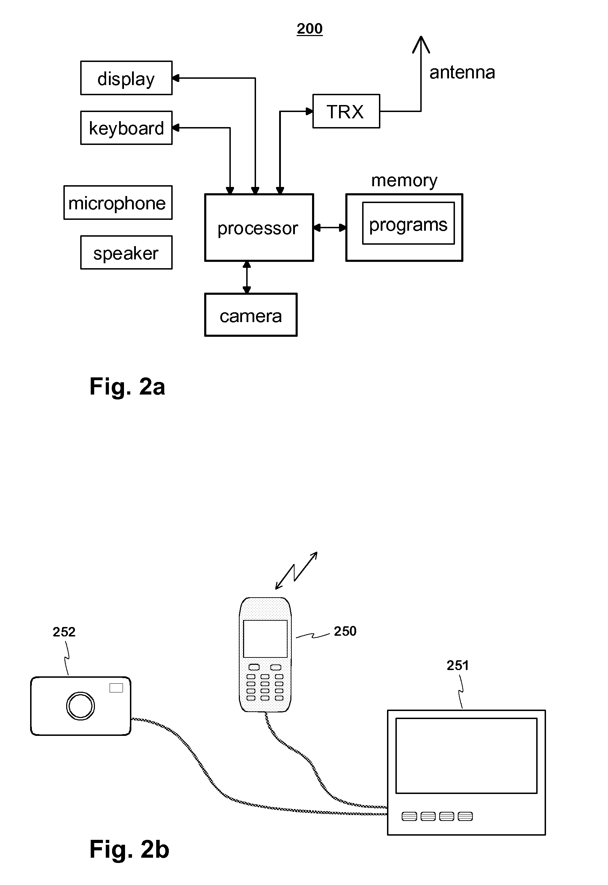

**Fig. 2a** illustrates an example of the electronic communication device according to the invention. The device 200 is capable of operating in wireless communication systems, such as GPRS and WCDMA systems. The device 200 comprises i.a. a transceiver TRX, an antenna, a user interface with a display and keyboard, a microphone and speaker, a camera, a processor and a memory. The memory contains the application programs needed in the function in accordance with the invention.

Thus the device 200 comprises means for establishing connections through a mobile communication network to another device, means for performing media operations initiated by a user, means for recognizing the mode of the device, means for editing the user interface to offer to the user a possibility to send information relating to a media operation and means for sending said information through a communication connection.

**Fig. 2b** illustrates an example of the arrangement according to the invention. The system comprises an electronic device 250, such as a mobile terminal. The device can be in the readiness state and in a state 'communication connected' with another device through a communication network. In addition, the arrangement comprises a PDA 251 (Personal Digital Assistant) and an external camera 252, which can be the one taking still pictures or a video camera. The camera and device 250 are connected to the PDA.

The user acts through the user interface of the PDA giving therefrom commands to the camera and communication device 250. The taken pictures can be stored in the memory of the camera 252. If a picture is taken, and a communication connection exists from the device 250 to another device, the user interface of the PDA is edited such that an operation is offered to the user, which operation is typically sending the taken picture to said another device.

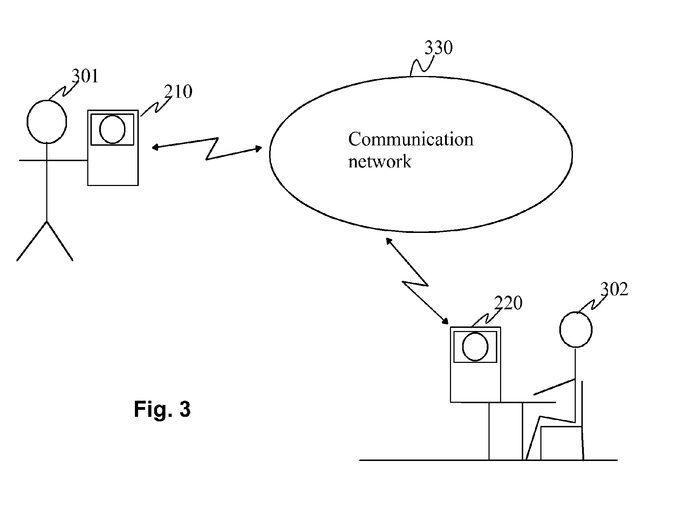

**Fig. 3** illustrates an example of the information transfer between two devices. From the first device 210 is established a communication connection to the second device 220 through a communication network 330. After establishing the communication connection the user 301 of the first device takes a picture e.g. of himself by a camera integrated to the first device with intent to send the picture to the second device 220. The first device 210 recognizes its mode and automatically suggests by the user interface to the user 301 the sending function. If the user 301 chooses this function, the second device 220 receives the picture with possible meta-information. The second device 220 recognizes the existing communication connection and shows immediately the picture to the user 302 of the second device.

The invention has been described above. The invention is not restricted to the details of the described embodiments. The inventive idea can be applied in different ways within the scope defined by the independent claims.

## Claims

1. A method comprising steps:
- recognizing a mode of a first communication device
- editing or changing a user interface so that a possibility to send information relating to a media operation is offered to a user of the first communication device based at least in part on whether or if or when a communication connected mode is recognized or identified, and
- detecting whether the sending possibility is selected and determining to send said information to a second communication device through a communication connection based at least in part on the detecting.

2. A method in accordance with claim 1, said information being visual information, audio information or audio-visual information, resulted from said media operation.

3. A method in accordance with claim 2, said media operation being performed in the first communication device.

4. A method in accordance with claim 3, said media operation being either creating information in the first device or retrieving information stored in a memory of the first device.

5. A method in accordance with claim 1, the communication connection, through which said information is sent, being the connection which exists when said mode is recognized.

6. A method in accordance with claim 1, the communication connection, through which said information is sent, being another connection than the connection which exists when said mode is recognized.

7. A method in accordance with claim 6, the recognized communication connection being a voice connection and said another connection being a GPRS connection.

8. A method in accordance with claim 1, the user interface being edited after said media operation is performed.

9. A method in accordance with claim 1, said information being received in the second device and presented automatically on its display, if an information source is a camera of the first device and a communication connection between these devices exists.

10. A method in accordance with claim 1, said information being received in the second device and a message of the received information is shown on its display for a user of the second device.

11. A communication device comprising means for establishing a communication connection through a mobile communication nework to another terminal devices, means for sending and receiving information, a user interface with a display, a camera, a processor and a memory with application programs and means for perform media operations, the communication device being arranged to implement the method steps defined in claim 1.

12. A communication device in accordance with claim 11, being further arranged to display a received information or a message of the received information depending on a content of meta-information being related to said information.

13. A computer program product for a communication device, comprising program means for
- for recognizing a mode of the communication device
- editing or changing a user interface so that a possibility to send information relating to a media operation is offered to a user of the communication device based at least in part on whether or if or when a communication connected mode is recognized or identified, and
- detecting whether the sending possibility is selected and determining to send said information to a second communication device through a communication connection based at least in part on the detecting.

14. A method comprising as a response to a situation in which a wireless communication connection is recognized and a result of a performance of an operation associated with processing of information is identified and/or a performance of an operation associated with processing of information is identified, a user interface of a first electronic device is edited or changed to offer a possibility to send information related to the operation and/or result to at least one other electronic device, and the user interface is used for allowing sending said information to the at least one other electronic device.

15. An apparatus comprising means for performing the method of any preceding method claim.

16. A method or computer program product or apparatus as in any preceding claim wherein the communication devices are wireless communication devices.
